# EUROPEAN PATENT APPLICATION

(11) **EP 3 865 609 A2**
(43) Date of publication of application: **18.08.2021**
(21) Application number: 19870112.0
(22) Date of filing: 09.10.2019
(51) Int. Cl.: D01D 5/04, D04H 3/016

(54) **NANOFIBER PRODUCTION APPARATUS AND NANOFIBER PRODUCTION METHOD**

(30) Priority: 09.10.2018 JP 2018191146
(71) Applicant: M-Techx Inc., Chuo-ku Tokyo 104-0033 (JP)
(72) Inventor: IKEGAYA Morihiko, Saitama-shi, Saitama 339-0073 (JP); SOTA Hiroyoshi, Saitama-shi, Saitama 339-0073 (JP); TAKIGAWA Yasuhiro, Saitama-shi, Saitama 339-0073 (JP)
(74) Representative: Plougmann Vingtoft a/s
(86) International application number: PCT/JP2019/039888
(87) International publication number: WO 2020/075774

(57) **Abstract**

[PROBLEM] To produce nanofiber sheets that are homogeneous over the entire surface of the sheets. Furthermore, to prevent a polymer solution that fails to become nanofibers in a fiber generation device from turning into droplets or small polymer masses that fly straight toward a nanofiber collection device, thereby avoiding directly hitting a nanofiber collecting surface of the nanofiber collection device.

[SOLUTION] A nanofiber production apparatus provided with: a nanofiber generation device equipped with a liquid discharge nozzle for discharging a polymer solution in which a polymer has been dissolved in a solvent, and a hot air discharge nozzle for discharging a high-temperature, high-speed gas at high pressure; and a collection device for suctioning and collecting nanofibers generated by the nanofiber generation device. A flow path suppression means is provided between the nanofiber generation device and the nanofiber collection device, said flow path suppression means causing the nanofibers generated by the nanofiber generation device to float so that the flow of nanofibers generated by the nanofiber generation device do not directly fly straight into the nanofiber collection device.

## Description

### Technical Field

The present invention relates to a nanofiber production apparatus and a nanofiber production method for producing nanofibers from a polymer solution. In particular, the present invention relates to a nanofiber production apparatus and a nanofiber production method for producing nanofibers from a polymer solution liquid in which a raw material polymer is dissolved in a solvent. Further specifically, the present invention relates to a nanofiber sheet production apparatus and a nanofiber sheet production method for producing a homogeneous nanofiber sheet from a polymer solution liquid in which a raw material polymer is dissolved in a solvent.

### Background Art

In the present description, the term "nanofiber" includes a fine-diameter fiber produced to have an average fiber diameter of several nanometers to several hundred nanometers, and further includes an aggregate of such fibers. In the aggregate, the fiber diameters are appropriately distributed.

In the present description, specifically, a molten liquid in which a raw material polymer is melted by heat or a solution liquid in which a raw material polymer is dissolved in a volatile solvent is used as a raw material, and the term "solution" or "polymer solution" is used to represent a solution, containing the both.

Nanofibers having fine fiber diameters have gathered attentions in recent years and have been widely used in a broad range of technical fields such as the medical field, the automotive field, the building material field, and the oil absorbing material field. The following methods are generally known as a method for producing the nanofibers: a method in which nanofibers are produced by discharging into a hot jet gas flow a molten liquid in which a raw material polymer is melted by heat (the melt spinning method); a method in which nanofibers are produced by discharging into a hot jet gas flow a solution liquid in which a raw material polymer is dissolved in a volatile solvent (the dry spinning method). Another method is also known in which nanofibers are produced by discharging a raw material polymer in a solution liquid (the wet spinning method), but this method is not targeted in the present invention.

Here, the melt spinning method and the dry spinning method have in common that a resin solution in liquid form is discharged toward a hot jet gas flow to produce nanofibers. Patent Documents 1 and 2 describe an apparatus for producing nanofibers from a molten liquid in which a raw material polymer is melted by heat, and Patent Documents 3 and 4 describe an apparatus for producing nanofibers from a solution liquid in which a raw material polymer is dissolved in a solvent.

The fiber diameters of nanofibers produced by melting a raw material polymer by heat is about several 100 nanometers to 10 micrometers; however, in the method in which nanofibers are produced from a solution liquid in which a raw material polymer is dissolved in a volatile solvent, a viscosity of the solution liquid is low, and it is possible to produce thinner nanofibers whose fiber diameters are about several 10 nanometers to several micrometers. Therefore, when nanofibers with further ultra-fine fiber diameters are produced, a method in which the nanofibers are produced from a solution liquid (the dry spinning method) is used.

Patent Documents 3 and 4 disclose methods in which nanofibers are produced from a solution liquid in which a raw material polymer is dissolved in a volatile solvent. Patent Document 3 discloses a method called the electric charge induced spinning method (or the electric field spinning method) in which spinning is performed while applying a high voltage. Patent Document 4 discloses a different method in which spinning is performed without applying a high voltage.

Patent Document 3 has an object to provide a method and apparatus for producing a nanofiber non-woven fabric that can efficiently produce a uniform nanofiber non-woven fabric. When a blower and an exhaust ventilator are activated, a voltage is applied between a nozzle and a collecting member in a housing, and a polymer solution is discharged from the nozzle, the polymer solution is discharged from the nozzle in a shape of a fine line-shaped body. An electrostatic burst occurs, and the polymer solution is thus explosively stretched, thereby a nanofiber made of a polymer having a diameter of submicron is effectively generated.

More specifically, when manufacturing non-woven fabric, since the blower and the exhaust ventilator are activated such that an air flow volume of the blower is more than or equal to 30% of an air flow volume of the exhaust ventilator, it is possible to suppress fluffing of the nanofibers accumulated on the collecting member; therefore, the unevenness of the thickness of the nanofibers on the collecting member can be made small. As described above, by making the air flow volume of the blower is made to be less than or equal to 100% of the air flow volume of the exhaust ventilator, the air flow volume on the nozzle side of the collecting member is prevented from becoming excessive, and as a result, nanofibers can be prevented from scattering.

In an apparatus disclosed in Patent Document 4, a guide box is provided on the downstream side of a nanofiber generation device and the upstream side of a collection device, so that when the suction box is activated, generation of an airflow from a nanofiber generation device to a suction box is facilitated and nanofibers produced by the nanofiber generation device are prevented from scattering in the periphery. In contrast, if the guide box is not provided, a high-speed high-temperature air injected from an air nozzle of the nanofiber generation device takes in a surrounding air; therefore, the airflow becomes unstable. In contrast, by using the guide box, a stable airflow can be generated. As a result, nanofibers with fine diameters can be produced stably.

### Prior Art Document

### Patent Document

Patent Document 1: JP 2016-183435 A
Patent Document 2: JP 2016-023399 A
Patent Document 3: JP 2012-127008 A
Patent Document 4: JP 2015-145880 A1

### Summary of Invention

### Problem to be solved by the invention

In the conventional nanofiber production method, it is aimed that nanofibers are collected while a stable air flow is formed from the nanofiber generation device to the collection device on the downstream side, but even when nanofibers are collected by the collection device, it is difficult to collect nanofibers with a homogeneous fiber diameter distribution only with such an airflow.

An object of the present invention is to obtain a homogeneous nanofiber sheet not by collecting nanofibers while conveying the nanofibers on the air flow from the nanofiber generation device as in the conventional method, but by suppressing the conveyance flow of the nanofibers generated by the nanofiber generation device so as to make the nanofibers be freely suspended inside a housing and by collecting the suspended nanofibers with the collection device by suctioning a gas in the housing. In this way, it is possible to suppress occurrence of the following situation: fine particles of the polymer solution having failed to become desired nanofibers by the nanofiber generation device becomes in a droplet state or polymer aggregation grains, and the droplets or the aggregation grains fly, while being carried by the air flow, to a nanofiber collection surface of the collection device, thereby directly colliding with the collected nanofibers. That is, an object of the present invention is to provide a nanofiber production apparatus and a nanofiber production method that comprise a member that suppresses damage of the collected nanofibers. This problem is further important because this problem largely affects the homogeneity of a completed product when a production apparatus and production method for nanofibers in a sheet shape are manufactured by using a collection surface in a flat plate shape.

### Means for solving the problem

A nanofiber production apparatus of the present invention comprises: a housing; a nanofiber generation device provided in the housing; and a nanofiber collection device that collects nanofibers discharged and generated by the nanofiber generation device. The nanofiber generation device has: a solution discharge nozzle that discharges a raw material polymer solution; and a hot air discharge nozzle that discharges a high-pressure high-temperature high-speed gas. The nanofiber collection device has: a nanofiber collection surface formed on one surface of the housing; and a suction device that suctions a gas in the housing from a rear surface side of the nanofiber collection surface. The nanofiber production apparatus further comprise at least one flow path control member that is provided on a downstream side of a nanofiber discharge flow generated by the nanofiber generation device and that suppresses a nanofiber discharge flow directed straight from the nanofiber generation device toward the nanofiber collection surface.

In the nanofiber production apparatus of the present invention, the flow path control member makes the generated nanofibers be suspended in the housing by suppressing generation of the nanofiber discharge flow directed straight from the nanofiber generation device toward the nanofiber collection surface, the suction device suctions the gas in the housing via the nanofiber collection surface, and the nanofibers are collected on the nanofiber collection surface.

In the nanofiber production apparatus of the present invention, the at least one flow path control member is disposed between the nanofiber generation device and the nanofiber collection surface of the nanofiber collection device so as to suppress generation of the straight nanofiber discharge flow discharged by the nanofiber generation device, thereby suppressing straight flight and direct collision, of the aggregation grain such as a droplet that has failed to become a nanofiber and has been generated, with the nanofiber collection surface of nanofiber collection device is suppressed.

In the nanofiber production apparatus of the present invention, the flow path control member has a size greater than an outer periphery of a straight flight region formed by imaginary lines connecting the nanofiber generation device and each vertex of the nanofiber collection surface of the nanofiber collection device.

In the nanofiber production apparatus of the present invention, the flow path control member is disposed at a position that is d/2 or more apart from the nanofiber collection surface of the nanofiber collection device, where a distance between the nanofiber generation device and the nanofiber collection surface is supposed to be d.

A nanofiber production method of the present invention uses a nanofiber production apparatus comprising: a housing; a nanofiber generation device provided in the housing; and a nanofiber collection device that collects nanofibers discharged and generated by the nanofiber generation device, wherein the nanofiber generation device has: a solution discharge nozzle that discharges a raw material polymer solution; and a hot air discharge nozzle that discharges a high-pressure high-temperature high-speed gas. The nanofiber collection device has: a nanofiber collection surface formed on one surface of the housing; and a suction device that suctions a gas in the housing from a rear surface side of the nanofiber collection surface. The nanofiber production apparatus further comprises at least one flow path control member that is provided on a downstream side of a nanofiber discharge flow generated by the nanofiber generation device and between the nanofiber generation device and the nanofiber collection surface. The nanofiber production method has collecting freely suspended nanofibers by suppressing a nanofiber discharge flow directed straight from the nanofiber generation device toward the nanofiber collection surface.

A nanofiber production method of the present invention uses a nanofiber production apparatus comprising: a nanofiber generation device configured with: a solution discharge nozzle that discharges a raw material polymer solution; and a hot air discharge nozzle that discharges a high-pressure high-temperature high-speed gas; and a nanofiber collection device that collects nanofibers discharged and generated by the nanofiber generation device. The nanofiber production apparatus further comprises at least one flow path control member provided between the nanofiber generation device and the nanofiber collection surface. In the nanofiber production method, straight flight of a nanofiber discharge flow discharged by the nanofiber generation device is suppressed, and flight and direct collision, of an aggregation grain such as a droplet that has failed to become a nanofiber and has been generated, with the nanofiber collection surface of the nanofiber collection device is suppressed.

### Effects of Invention

In the present invention, the nanofibers generated by the nanofiber generation device are made to be freely suspended in the housing, and the nanofibers are collected by the collection device, so that highly homogeneous nanofiber aggregate can be collected. That is, in the present invention, by suppressing the nanofiber discharge flow that is generated by the nanofiber generation device and flies straight toward the nanofiber collection device while being carried by a high-temperature high-speed gas flow, it is possible to disperse and scatter the generated nanofibers in the housing, thereby making the generated nanofibers be freely suspended.

In the present invention, specifically, by providing between the nanofiber generation device and the nanofiber collection device a flow path control member having such a size that will be described in the following section, it is possible to suppress a flow of nanofibers that are generated by the nanofiber generation device and fly straight toward the nanofiber collection device while being carried by the high-temperature high-speed gas flow. In addition, because an aggregation grain such as a droplet generated in the nanofiber generation device can also be suppressed by the flow path control member, the droplet and the like do not directly collide with the nanofiber collection surface of the nanofiber collection device, so that homogeneous nanofibers can be produced. The present invention exerts advantageous effects, in particular when a nanofiber sheet is produced.

### Brief Description of Drawings

Fig. 1 is a diagram showing an embodiment of a nanofiber production apparatus of the present invention for producing nanofibers from a molten or dissolved polymer solution.
Fig. 2 is a diagram for describing a homogeneous outer appearance shape of a nanofiber sheet collected by the nanofiber production apparatus of the present invention.
Fig. 3 is a diagram for describing installation positions, shapes, and sizes of flow path control members that are major components of the present invention.
Fig. 4 is a diagram showing an embodiment of an embodiment of another form of the flow path control member, which is a major component of the present invention.
Fig. 5 is a diagram for describing in detail a function of a nanofiber generation device of the nanofiber production apparatus of the present invention.
Fig. 6 is a diagram showing a basic configuration of an apparatus of the conventional art for producing nanofibers from a molten polymer solution liquid.
Fig. 7 is a diagram showing an outer appearance shape of a nanofiber sheet produced by a nanofiber production apparatus of the conventional art.
Fig. 8 (the conventional art) is a diagram illustrating how droplets and the like of a polymer solution that has failed to become nanofibers when nanofibers were produced by a conventional nanofiber production apparatus fly to a nanofiber collection surface of a nanofiber collection device.
Fig. 9 (an invention of the present application) is a diagram illustrating positions where there are provided flow path control members that suppress flight, of aggregation grains such as droplets of a polymer solution having failed to become nanofibers, to the nanofiber collection surface of the nanofiber collection device.

### Description of Embodiment

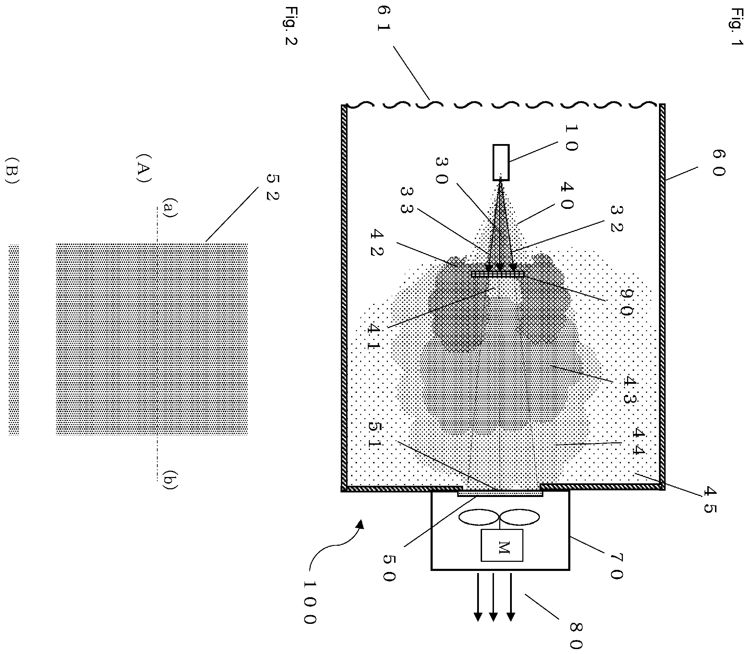

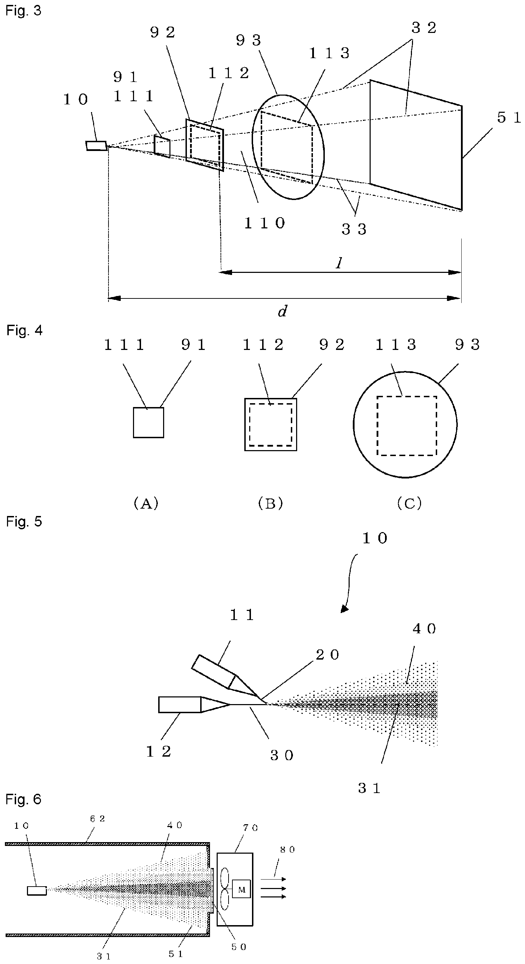

A nanofiber production apparatus 100 of the present invention comprises, as shown in Figs. 1 and 5: a nanofiber generation device 10 comprising: a solution discharge nozzle 11 for a polymer solution liquid in which a raw material polymer is dissolved in a volatile solvent; and a hot air discharge nozzle 12 for a high-pressure high-temperature high-speed gas; a housing 60 in which nanofibers generated by the nanofiber generation device 10 are freely suspended; and a nanofiber collection device 50 that suctions and collects the nanofibers suspended in the housing 60. In the nanofiber production apparatus 100 of the present invention, between the nanofiber generation device 10 and a nanofiber collection surface 51 of the nanofiber collection device 50 there is provided at least one flow path control member 90 that suppresses a straight flow of a nanofiber discharge flow generated in the nanofiber generation device 10. This arrangement suppresses straight flight of the nanofiber discharge flow and also suppresses flight of droplets and small polymer aggregation grains 45 that have failed to become nanofibers; therefore, the aggregation grains 45 made up of droplets and small polymer agglomerations do not directly collide with the nanofiber collection surface 51 of the nanofiber collection device 50, so that the nanofibers are collected on the nanofiber collection surface 51 of the nanofiber collection device 50, and a nanofiber sheet 52 with a homogeneous fiber diameter distribution is formed.

An inventive concept and embodiments of the present invention will be described below with reference to the accompanying drawings, but the present invention is not limited only to the structure of a concrete embodiment, and such a design change that can be easily achieved by a person skilled in the art can be done as a matter of course, and the design change is within the scope of the technical idea of the present invention.

In the followings, the description of the present invention will be given on an embodiment where production is performed by discharging into a hot jet flow a solution liquid in which a raw material polymer is dissolved in a volatile solvent (the dry spinning method), but the present invention can also be applied to production by discharging into a hot jet flow a molten liquid in which a raw material polymer is melted by heat (the melt spinning method). In the following description of the present invention, the description will be given only in a case where a nanofiber sheet is produced; however, when the shape of the collection surface is three-dimensionally configured, a three-dimensional nanofiber collection body can be formed.

Fig. 5 is a diagram for describing a configuration of the nanofiber generation device 10, and the configuration is conventionally known. The nanofiber generation device 10 comprises the solution discharge nozzle 11 that discharges a raw material polymer solution; and a hot air discharge nozzle 12 that discharges a high-pressure high-temperature high-speed gas. Not shown in the drawing, but it is supposed that a device for supplying the solution discharge nozzle 11 with a solution liquid in which a raw material polymer is dissolved in a volatile solvent is connected to the solution discharge nozzle 11, and it is supposed that a device for supplying the hot air discharge nozzle 12 with a high-temperature high-speed gas is connected to the hot air discharge nozzle 12. A polymer solution 20 discharged from the solution discharge nozzle 11 intersects with a high-temperature high-speed gas flow 30 discharged from the hot air discharge nozzle 12, on the downstream side of the high-temperature high-speed gas flow 30, and the polymer solution 20 is expanded by an air velocity of the high-temperature high-speed gas flow 30. In the process, the solvent has volatilized, thereby generating a nanofiber flow 40 of polymer fibers.

In the nanofiber flow 40 generated by the nanofiber generation device 10, the nanofibers having desired fiber diameters and relatively long fiber lengths are densely distributed in the vicinity of a flight central axis 31 of the high-temperature high-speed gas flow 30 generated by the hot air discharge nozzle 12, and the nanofibers with smaller fiber diameters, shorter fiber lengths, and smaller weights increase in number with the distance from the flight central axis 31 due to a mechanical action of fluid. The distribution density of the nanofibers with long fiber lengths tends to become lower with the distance from the flight central axis 31. In Fig. 5, the gradation of shaded areas shows the condition of the distribution density. Not only the nanofibers with different fiber lengths, but also the nanofibers with different fiber diameters are generated.

Fig. 6 shows a basic configuration of a conventionally known nanofiber production apparatus for producing nanofibers from a polymer solution in which polymer is dissolved. In the drawing, the components having the same functions as the components of the present invention are assigned the same references. The polymer solution 20 and the high-pressure high-temperature high-speed gas flow 30 discharged in the nanofiber generation device 10 shown in Fig. 5 becomes the nanofiber flow 40 in a cylindrical shape housing 62 surrounding the outer peripheral part of the whole production apparatus, and the nanofiber flow 40 flies straight toward the nanofiber collection surface 51. The generated nanofiber flow 40 is curried by the flow of the high-pressure high-temperature high-speed gas flow 30 discharged from the hot air discharge nozzle 12 and by a suction flow 80 of a suction device 70 provided on the downstream of the nanofiber collection device 50, and flies toward the nanofiber collection surface 51 of the nanofiber collection device 50. As already described, the distribution density of the nanofibers is high on the flight central axis 31 of the high-temperature high-speed gas flow 30, and the nanofibers with longer nanofiber lengths are affected more by a force of wind and fly straight toward the nanofiber collection device 50. Because the nanofiber flow 40 has fiber diameters of several 10 nanometers to several micrometers and are light in weight, the nanofiber flow 40 is more affected by a mechanical action of fluid with distance from the flight central axis 31 of the high-temperature high-speed gas flow 30, and the nanofiber flow 40 are scattered like dusts in the cylindrical shape housing 62 while being disturbed by the flow of the gas. Regarding the nanofiber flow 40, the suction device 70 is disposed outside the cylindrical shape housing 62 and suctions the gas in the cylindrical shape housing 62 from the back of the nanofiber collection device 50 (the downstream side of the nanofiber collection surface 51) while controlling a suction force, so that the suspended nanofibers are efficiently collected being carried by a suction airflow in the cylindrical shape housing 62. The reference M in the frame of the suction device 70 represents a fan motor, and the arrows 80 shown outside the suction device 70 represent the airflow (the suction flow) in which the gas in the cylindrical shape housing 62 is suctions and discharged outside.

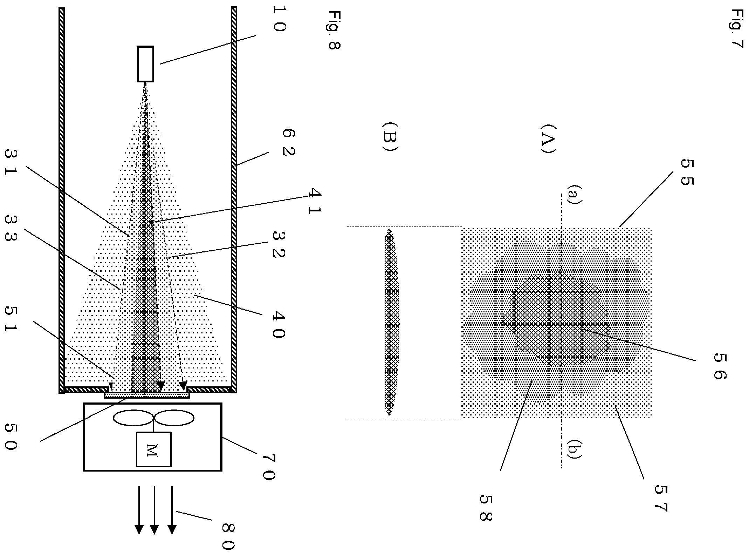

Fig. 7 is a pattern diagram illustrating a nanofiber sheet 55 collected by a conventional nanofiber collection device 50. Fig. 7(A) is a diagram shown from the front surface of the nanofiber sheet 55, and Fig. 7(B) is a diagram showing a cross-section of the nanofiber sheet 55 taken along the dashed-dotted line connecting (a) (b) and viewed from the side. As shown in Fig. 7(A), the thickness of the collected nanofiber sheet 55 is not homogeneous. In the central vicinity 56 of the nanofiber sheet 55 there are more nanofibers with long fiber lengths and large masses, and the nanofibers with smaller nanofiber diameters and shorter fiber lengths increase toward the outer side as shown in the outer parts 57 and 58, so that the thickness of the nanofiber sheet 55 is thicker in the vicinity of the center and becomes thinner toward the outer side, and as a result, the whole of the nanofiber sheet 55 cannot be formed homogeneously, as shown in Fig. 7(B). Such a condition is shown by the gradation of shaded areas. Specifically, in Fig. 7(A), the darker color represents the greater thickness, and the lighter color represents the smaller thickness.

Further, in the conventional nanofiber collection device 50, due to a slight fluctuation in the viscosity of the polymer solution discharged from the solution discharge nozzle 11 of the nanofiber generation device 10 and an airflow turbulence in the cylindrical shape housing 62, there occurs a fluctuation in the high-pressure high-temperature high-speed gas flow discharged from the hot air discharge nozzle 12. This fluctuation causes an issue that not much but little polymer solution discharged from the solution discharge nozzle 11 is sometimes discharged from the hot air discharge nozzle 12 in a droplet state without becoming nanofibers with desired fiber diameters, and is blown away while being carried by the high-temperature high-speed gas flow 30. In that case, in particular, because the aggregation grains 45 such as droplets have larger masses than nanofibers droplet, the aggregation grains 45 are not suspended or dispersed in the cylindrical shape housing 62 like the nanofiber flow 40, and instead, the aggregation grains 45 fly straight toward the nanofiber collection surface 51 of the nanofiber collection device 50 like bullets, thereby resulting in damaging the collected nanofiber sheet. Fig. 8 is a diagram showing that condition. It is not known in which direction the aggregation grains 45 such as droplets fly, but if it is assumed that the aggregation grains 45 fly almost straight being carried by the airflow, the aggregation grains 45 such as droplets that have been generated at the central part of the gas flow without being generated as nanofibers fly along the flight central axis 31 of the high-temperature high-speed gas flow to the periphery of the center of the nanofiber collection surface 51 of the nanofiber collection device 50. However, the aggregation grains 45 such as droplets do not necessarily have to be generated in the center of the nanofiber collection surface 51 of the nanofiber collection device 50, and it is therefore not known in which direction the aggregation grains 45 fly. However, if it is assumed that the aggregation grains 45 such as droplets fly straight, it can be estimated that many of the aggregation grains 45 fly into the region surrounded by flight trajectory circumference lines 32 and 33 connecting the nanofiber generation device 10 and four ends (vertices) of the nanofiber collection surface 51 of the nanofiber collection device 50 (the region is the straight flight region 110) and collide with the nanofiber collection surface 51. Therefore, if the aggregation grains 45 such as droplets flying into the straight flight region 110 surrounded by the flight trajectory circumference lines 32 and 33 connecting the nanofiber generation device 10 and the outer edges of the nanofiber collection surface 51 of the nanofiber collection device 50 are made not to collide with the nanofiber collection surface 51 of the nanofiber collection device 50, the aggregation grains 45 such as droplets do not damage the collected nanofiber sheet. Here, the outer edges of the nanofiber collection surface 51 are the peripheral edge parts of the shape of the collection surface constituting the nanofiber collection surface 51.

With reference to Fig. 3, a little more detailed description will be given on a region where the aggregation grains 45 such as droplets generated in the nanofiber generation device 10 do not damage the collected nanofiber sheet. Fig. 3 is a bird's eye view illustrating three-dimensionally the relation between the nanofiber generation device 10 and the nanofiber collection surface 51 of the nanofiber collection device 50 (in the figure, the outer edges of the nanofiber collection surface 51 form a quadrangular shape constituted by four sides and four vertices). The region surrounded by the flight trajectory circumference lines 32, 32 and 33, 33 that are imaginary lines connecting the nanofiber generation device 10 and the ends (vertices) of the nanofiber collection surface 51 of the nanofiber collection device 50 is a supposed straight flight region (that is, the straight flight region 110). In this description, since the embodiment shows the case where the nanofiber collection surface 51 of the nanofiber collection device 50 has a quadrangular shape, the supposed straight flight region 110 has a quadrangular pyramid shape, and the cross-section of the quadrangular pyramid shape has a shape similar to the quadrangular shape of the nanofiber collection surface 51 of the nanofiber collection device 50. That is, if the shape of the nanofiber collection surface 51 of the nanofiber collection device 50 is, for example, a circle, an oval, or a polygon, the supposed straight flight region 110 has a pyramid shape whose bottom face is such a shape.

The nanofiber production apparatus 100 of the present invention is provided, at least one place, with a member (the flow path control member 90) that controls the flow path and has such a size that the nanofiber collection surface 51 cannot be seen when the nanofiber collection surface 51 of the nanofiber collection device 50 is viewed from the nanofiber generation device 10. That is, the flow path control member 90 has such dimensions that the flow path control member 90 covers the straight flight region 110 that contains the flight central axis 31 and is surrounded by the flight trajectory circumference lines 32 and 33 so as to control the straight flow path of the aggregation grains. Therefore, there is provided the feature that, in the region (the straight flight region 110) surrounded by flight trajectory circumference lines 32 and 33, this arrangement suppresses the flow of the straight flight of the nanofiber flow 40 generated in the nanofiber generation device 10 and also suppresses the direct flight, of the droplets or the like generated in the nanofiber generation device 10, to the nanofiber collection device 50.

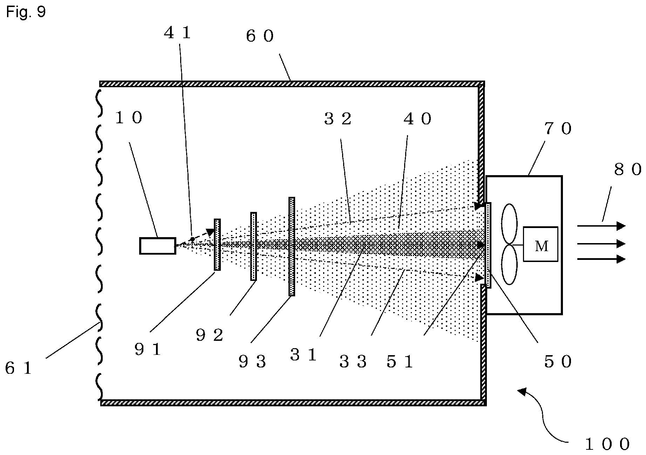

Fig. 8 is a vertical cross-sectional view of a conventional nanofiber production apparatus. Fig. 9 is a vertical cross-sectional view of the nanofiber production apparatus 100 of the present invention, and illustrates the relation with the at least one flow path control member 90 disposed on a plane covering the area from the flight trajectory circumference lines 32 to the flight trajectory circumference lines 33 of the straight flight region 110 in which aggregation grains 45 or the like fly straight from the nanofiber generation device 10. Fig. 9 shows simultaneously the flow path control member 90 as three flow path control members 91, 92, and 93 disposed at different arrangement distances from the nanofiber generation device 10.

Fig. 1 shows the nanofiber production apparatus 100 for producing a nanofiber sheet that is a specific embodiment of the present invention. The at least one flow path control member 90 is provided between the nanofiber generation device 10 and the nanofiber collection device 50. This arrangement suppresses the straight flow, of the nanofiber flow 40 that is generated by the nanofiber generation device 10 and flies while being carried by the high-temperature high-speed gas flow 30, toward the nanofiber collection device 50. In addition, the configuration is made such that the aggregation grains 45 such as droplets having failed to become nanofibers in the nanofiber generation device 10 are also received by the flow path control member 90 so as to suppress the discharge flow of the aggregation grains 45 such as droplets directly flying to the nanofiber collection surface 51 of the nanofiber collection device 50.

The flow path control member 90 is disposed at the middle of the imaginary lines (the dashed-dotted lines of Figs. 1 and 9) connecting the vertices of the polygon-shaped nanofiber collection surface 51 of the nanofiber collection device 50 in the housing 60 and a nanofiber generation position of the nanofiber generation device 10. For example, when the nanofiber collection surface 51 of the nanofiber collection device 50 has a quadrangular shape, the lines connecting the four vertices of the nanofiber collection surface 51 and the nanofiber generation position of the nanofiber generation device 10 (in the present embodiment, the position at which the polymer solution 20 and the high-pressure high-temperature high-speed gas flow 30 intersect each other) are the flight trajectory circumference lines 32 and 33 of the straight flight region 110. Since such a flow path control member 90 is provided, the nanofiber flow 40 that is generated by the nanofiber generation device 10 and flies while being carried by the high-temperature high-speed gas flow 30 is suppressed by the flow path control member 90 and thus cannot travel straight, so that the nanofiber flow 40 is washed to the surroundings of the flow path control member 90. As a result, the scattering nanofiber flow 40 goes around the outer side of the flow path control member 90 and diffuses in the housing 60 in the direction to the nanofiber collection device 50 while flowing in an area 42. With this arrangement, the nanofiber flow 40 generated in the nanofiber generation device 10 is suppressed by the flow path control member 90 and is further diffused, and the nanofiber flow is diffused further to an area 43 and an area 44, while being carried by a gas flow whose linear-motion energy is reduced, and is suspended in the housing 60. Then the nanofibers are slowly suctioned by the suction device 70 of the nanofiber collection device 50 and are thus collected on the nanofiber collection surface 51. To confine the nanofibers suspended in the housing 60, it is preferable that a front face of the housing 60 is closed with a curtain 61 to form a substantially closed space. At this time, it is necessary to consider a balance between a flow rate of the gas discharged from the hot air discharge nozzle 12 and a gas suction rate of the nanofiber collection device 50 so that the air pressure in the housing 60 is not in a vacuum state.

Fig. 2 shows the nanofiber sheet 52 produced by the nanofiber production apparatus 100 of the present invention shown in Fig. 1. Fig 2(A) is an outer appearance when viewed from the front surface of the nanofiber sheet 52, and Fig. 2(B) is a cross-sectional view when cut along the dashed-dotted line connecting (a) and (b) for observation. This shows that by providing the flow path control member 90, which is a major component of the present invention, at one or more places, it is possible to produce such a nanofiber sheet 52 that, over the entire surface of the nanofiber collection surface 51, the nanofibers are homogeneous and the sheet thickness is even.

In the configuration that the flow path control member 90 of the present invention should comprise, the flow path control member 90 preferably has such a size that the nanofiber collection surface 51 of the nanofiber collection device 50 cannot be seen when the flow path control member 90 is viewed from the side of the nanofiber generation device 10. In other words, the flow path control member 90 preferably has a size that is larger than the region surrounded by the flight trajectory circumference lines 32 and 33 (the dashed-dotted lines in Fig. 3) connecting the vertices of the polygon-shaped nanofiber collection surface 51 of the nanofiber collection device 50 and the nanofiber generation position of the nanofiber generation device 10 (the intersection between the solution discharge nozzle 11 for the polymer solution liquid and the hot air discharge nozzle 12 for discharging the high-pressure high-temperature high-speed gas). With this configuration, the flow path control member 90 can block the aggregation grains 45 such as droplets that failed to become nanofibers in the nanofiber generation device 10 and are likely to fly straight. Thus, between the flow path control member 90 and the nanofiber collection device 50, the flight of the droplets is suppressed within the trajectories represented by the dashed-dotted lines (the supposed flight trajectory circumference lines 32 and 33), and it is possible to suppress the direct collision of the droplets with the nanofiber collection surface 51 of the nanofiber collection device 50. When the aggregation grains 45 such as droplets are suppressed by the flow path control member 90, the kinetic energy for linear motion of the aggregation grains 45 is sharply decreased; therefore, even when the aggregation grains 45 are suctioned by the suction device 70, the aggregation grains 45 do not damage the nanofiber sheet 52 collected on the nanofiber collection surface 51 of the nanofiber collection device 50. Even if the dimensions of the flow path control member 90 are smaller than the dimensions of the outer periphery of flight trajectory circumference lines 32 and 33, the flow path control member 90 is sufficiently effective to suppress the straight flight of the nanofibers.

It is important where between the nanofiber generation device 10 and the nanofiber collection device 50 to dispose the flow path control member 90, and the size of the flow path control member 90 is important. With reference to Fig. 3, a detailed description will be given on the position at which the flow path control member 90 is disposed and on the size of the flow path control member 90.

First, a description will be given on the position where the flow path control member 90 is disposed. When the flow path control member 90 is disposed near the nanofiber collection surface 51 of the nanofiber collection device 50, the flow path control member 90 needs to have a large area. In addition, the following issues will arise: it is not impossible to capture the droplets or the like in an early stage; and although the nanofibers should be normally collected by the nanofiber collection device 50, a large part of the flow path to the nanofiber collection surface 51 of the nanofiber collection device 50 is blocked, so that there arises a difficulty in collecting the nanofibers.

On the other hand, if the flow path control member 90 is disposed near the nanofiber generation position of the nanofiber generation device 10, the flow path control member 90 may be small. However, there arises some phenomena, for example, an aggregation grain 45 of polymer fibers is generated by fusion of fibers that have not yet sufficiently become nanofiber, in the state where the solvent contained in the polymer solution is not fully volatilized, in other words, in the process of generating nanofibers by stretching, so that there arises a problem that a nanofiber with a desired fiber diameter is not generated. Therefore, the flow path control member 90 is disposed to satisfy the following conditions: a sufficient distance needs to be secured for the polymer solution discharged from the nanofiber generation device 10 to be generated into a nanofiber; and it is necessary to secure such a space that the nanofiber flow 40 is collected by the nanofiber collection device 50 after being sufficiently suspended in the housing 60.

Because the distance from the nanofiber generation device 10 to the flow path control member 90 depends on the performance of the nanofiber generation device 10, it is generally impossible to show a rough indication like a numerical value. However, it goes without saying that the flow path control member 90 must be disposed while securing sufficient distance for the discharged polymer solution to be generated into nanofibers by stretching.

Fig. 1 is a schematic diagram to illustrate, by using the densities of shading areas, also how the density of the nanofiber flow 40 in the housing 60 is distributed when the flow path control member 90 is disposed between the nanofiber generation device 10 and the nanofiber collection device 50. In Fig. 1, the darker color represents the thicker distribution density, and the lighter color represents the thinner distribution density.

As shown in Fig. 1, since the flow path of the nanofibers generated in the nanofiber generation device 10 is blocked by the flow path control member 90, the nanofiber distribution density is thin in the area 41 right behind the flow path control member 90 as shown in the drawing. On the other hand, the straight flow of the nanofibers whose straight flight is suppressed by the flow path control member 90 is blocked and spreads in all directions in front of the flow path control member 90. The nanofibers are very light in weight, and the flow of the nanofibers is disturbed; therefore, the high-density nanofibers on the flight central axis 31 of the flow of the already described the high-temperature high-speed gas flow 30 and the low-density nanofibers apart from the flight central axis 31 of the flow of the high-temperature high-speed gas flow 30 are perfectly mixed and flow outside the flow path control member 90, and the distribution density of the nanofibers in the area 42 becomes thick as shown in the drawing. However, the nanofibers of the distribution density in the area 42 are diffused by being carried by the gas flow in the housing 60 and are suspended, and the distribution density of the nanofibers in the area 43 and the area 44 becomes gradually thinner. Finally, all the nanofibers generated in the nanofiber generation device 10 are suspended in the housing 60 in the state of being perfectly mixed, and the gas in the housing 60 is suctioned by the suction device 70, so that the nanofibers are collected on the nanofiber collection device 50. Therefore, the collected nanofiber sheet 52 can be produced as a sheet that is homogeneous over the entire area of the sheet as shown in Fig. 2.

To produce a homogeneous and high-quality nanofiber sheet, the nanofiber collection device 50 is required to collect the nanofibers whose fiber diameters are uniformly distributed over the entire area of the nanofiber collection surface 51, and there is a need for a sufficient space for the nanofibers generated in the nanofiber generation device 10 to be suspended in the housing 60. To suppress the straight flight of the nanofibers through a study like a trial-and-error approach, the flow path control member 90 is preferably disposed at such a position that, as shown in Fig. 3, the distance 1 from the flow path control member 90 to the nanofiber collection surface 51 of the nanofiber collection device 50 is secured to be greater than or equal to 1/2 of the total spatial distance d (the distance from the nanofiber generation device 10 to the nanofiber collection surface 51 of the nanofiber collection device 50) of the housing 60 so that the space from the flow path control member 90 to the nanofiber collection surface 51 of the nanofiber collection device 50 is sufficiently secured. More preferably, it is desirable to secure that the distance 1 is greater than or equal to 2/3 to 1/2 of the distance d between the nanofiber generation device 10 and the nanofiber collection device 50.

Next, the size and shape of the flow path control member 90 will be described with reference to Figs. 3 and 4. The space surrounded by the flight trajectory circumference lines 32, 32, and 33, 33 represented by the dashed-dotted lines connecting the nanofiber generation device 10 and each vertex of the polygon-shaped nanofiber collection surface 51 of the nanofiber collection device 50 (when the collection surface is a circular shape, any point on the circumference) is the supposed space (the supposed straight flight region 110) in which the aggregation grains 45 such as droplets fly straight. Therefore, the flight, of the aggregation grains 45 such as droplets, in this supposed space only has to be suppressed. The flow path control member 90 only has to have a size greater or equal to an area of the cross-section of the supposed space (the supposed straight flight region 110) in which the droplets or the like fly straight, on which cross-section the supposed space is blocked by a plane parallel to the nanofiber collection surface 51 and located at the position where the flow path control member 90 is disposed. That is, it is enough that the flow path control member 90 has a size greater than or equal to the area of a vertical cross-section parallel to the bottom face of the quadrangular pyramid whose bottom face is the nanofiber collection surface 51 and whose apex is the nanofiber generation device 10. Of course, as described above, even when the dimensions of the flow path control member are smaller than the area of the above vertical cross-section, the flow path control member is sufficiently effective.

Fig. 3 simultaneously shows the following members as the flow path control member 90 that blocks the supposed straight flight region 110: the flow path control member 91, the flow path control member 92, and the flow path control member 93 that are respectively disposed at a far distance, an intermediate distance, and a close distance from the nanofiber collection surface 51. In the present invention, any of these flow path control members 91, 92, and 93 is supposed to be provided at least one place, but a plurality of flow path control members can be simultaneously provided as necessary.

Fig. 4 is a diagram showing examples of the size and shape of the flow path control member 90 (91, 92, and 93). Fig. 4(A) shows the case where the flow path control member is disposed at a distance far from the nanofiber collection surface 51 and close to the nanofiber generation device 10. In the case, the supposed space (the straight flight region's outer periphery 111) in which the droplets or the like fly straight and the flow path control member 91 have the same size and shape. Fig. 4(B) shows the case where the flow path control member is disposed at an intermediate distance from the nanofiber generation device 10, and the flow path control member 92 has the same shape (quadrangular shape) as and a size larger than the supposed space (the straight flight region's outer periphery 112) in which the droplets or the like fly straight. Fig. 4(C) shows the case where the flow path control member is disposed at a far distance from the nanofiber generation device 10 (at a distance close to the nanofiber collection surface 51), and the flow path control member 93 has a different shape (circular shape) from and a size larger than the supposed space (the straight flight region's outer periphery 113) in which the droplets or the like fly straight. That is, the flow path control members shown in Figs. 4(B) and 4(C) are different embodiments. In Fig. 4(B), the nanofiber collection surface 51 and a face 112 (the straight flight region's outer periphery) that is blocked by the flow path control member 92 have shapes similar to each other. In Fig. 4(C), the flow path control member 93 covering the face 113 (the straight flight region's outer periphery) has a circular shape. That is, the flow path control member 90 does not have to have a similar shape to the supposed face 113 (the straight flight region's outer periphery) that should be blocked by the flow path control member 90. In the case where the flow path control member 92 has the shape and size in Fig. 4(B), since the four corners of the flow path control member 92 are angular corners, the flow of the nanofibers changes sharply in the vicinities of the four corners. However, the shape in Fig. 4(C) has no four corners, the flow of the nanofiber changes gently.

The flow path control member 90 (91, 92, 93) only has to cover the straight flight region 110 (the flight region where the nanofibers are supposed to fly straight), and the flow path control member 90 (91, 92, 93) can have any shape. The essence of the present invention is to suppress direct flight of the nanofibers generated and discharged in the nanofiber generation device 1 to the nanofiber collection surface 51 of the nanofiber collection device 50 while being carried by the high-temperature high-speed gas flow 30. The above description describes an embodiment in which the plate-shaped flow path control member 90 is provided as a member for that purpose. However, the member is not limited to a plate-shaped member, and any member for suppressing the straight flow of the nanofibers can be used.

Not shown in the drawing, but the flow path control member 90 of the present invention does not have to be disposed on the flight central axis 31 of the high-temperature high-speed gas flow, and it is possible to additionally use flow path control members that extend to the flight central axis 31 side from a ceiling surface, bottom surface, and upper and lower side surfaces of the housing 60 and each have an opening in the part corresponding to the flight central axis 31. In that case, it is desirable to alternately arrange the flow path control member 90 (91, 92, 93) disposed on the flight central axis 31 and the flow path control member extending from the ceiling surface, bottom surface, and upper and lower side surfaces of the housing 60 to the flight central axis 31 side. Further, in that case, it is preferable to make the sizes of the openings in the parts, of the flow path control members extending from the ceiling surface, bottom surface, and upper and lower side surfaces of the housing 60 to the flight central axis 31 side, corresponding to the flight central axis 31 smaller than the size of the flow path control member 90 (91, 92, 93) disposed on the flight central axis 31 so that a straight flow path for nanofibers is not formed.

As described above, the present invention relates to an apparatus and method for producing nanofibers from, in particular, a polymer solution liquid dissolved in a solvent, and the present invention provides a production apparatus and a production method for nanofibers preferable for producing a homogeneous nanofiber sheet. Because, with the apparatus and the method, droplets and small aggregation grains 45 constituted by a polymer solution having failed to become nanofibers do not directly collide with or fly to the nanofiber collection surface 51 of the nanofiber collection device 50, the droplets and the aggregation grains 45 do not damage the surface of the collected nanofiber stack.

### Reference List

100 nanofiber production apparatus
10 nanofiber generation device
11 solution discharge nozzle
12 hot air discharge nozzle
20 polymer solution
30 high-temperature high-speed gas flow
31 flight central axis of a high-temperature high-speed gas flow
32, 33 flight trajectory circumference lines (the trajectory of the outer periphery of the straight flight region 110 in which polymer droplets fly straight due to the high-temperature high-speed gas flow)
40 nanofiber flow (a flight state of nanofibers)
41, 42, 43, 44 areas representing a distribution density of scattering nanofibers
45 aggregation grain
50 nanofiber collection device
51 nanofiber collection surface
52 nanofiber sheet (the present invention)
55 nanofiber sheet (the conventional art)
60 housing
61 curtain
62 cylindrical shape housing (the conventional art)
70 suction device
80 suction flow
M fan motor
90 flow path control member
91, 92, 93 flow path control members disposed at different positions to be parallel to the nanofiber collection surface
110 straight flight region
111, 112, 113 straight flight region's outer periphery

## Claims

1. A nanofiber production apparatus comprising:
a housing;
a nanofiber generation device provided in the housing, the nanofiber generation device having:
a solution discharge nozzle that discharges a raw material polymer solution; and
a hot air discharge nozzle that discharges a high-pressure high-temperature high-speed gas;
a nanofiber collection device that collects nanofibers discharged and generated by the nanofiber generation device, the nanofiber collection device having:
a nanofiber collection surface formed on one surface of the housing; and
a suction device that suctions a gas in the housing from a rear surface side of the nanofiber collection surface, and
at least one flow path control member that is provided on a downstream side of a nanofiber discharge flow generated by the nanofiber generation device and that suppresses a nanofiber discharge flow directed straight from the nanofiber generation device toward the nanofiber collection surface.

2. The nanofiber production apparatus according to claim 1, wherein the flow path control member makes the generated nanofibers be suspended in the housing by suppressing generation of the nanofiber discharge flow directed straight from the nanofiber generation device toward the nanofiber collection surface,
the suction device suctions the gas in the housing via the nanofiber collection surface, and
the nanofibers are collected on the nanofiber collection surface.

3. The nanofiber production apparatus according to claim 1, wherein the at least one flow path control member is disposed between the nanofiber generation device and the nanofiber collection surface of the nanofiber collection device,
generation of the straight nanofiber discharge flow discharged by the nanofiber generation device is suppressed, and
straight flight and direct collision, of the aggregation grain that has failed to become a nanofiber and has been generated, with the nanofiber collection surface of nanofiber collection device are suppressed.

4. The nanofiber production apparatus according to claim 1, wherein the flow path control member has a size greater than an outer periphery of a straight flight region formed by imaginary lines connecting the nanofiber generation device and each vertex of the nanofiber collection surface of the nanofiber collection device.

5. The nanofiber production apparatus according to claim 1 or 2, wherein the flow path control member is disposed at a position that is d/2 or more apart from the nanofiber collection surface of the nanofiber collection device, where a distance between the nanofiber generation device and the nanofiber collection surface is supposed to be d.

6. A nanofiber production method using a nanofiber production apparatus comprising:
a housing;
a nanofiber generation device provided in the housing; and
a nanofiber collection device that collects nanofibers discharged and generated by the nanofiber generation device,
wherein the nanofiber generation device has:
a solution discharge nozzle that discharges a raw material polymer solution; and
a hot air discharge nozzle that discharges a high-pressure high-temperature high-speed gas,
the nanofiber collection device has:
a nanofiber collection surface formed on one surface of the housing; and
a suction device that suctions a gas in the housing from a rear surface side of the nanofiber collection surface, and
the nanofiber production apparatus further including at least one flow path control member that is provided on a downstream side of a nanofiber discharge flow generated by the nanofiber generation device and between the nanofiber generation device and the nanofiber collection surface, the nanofiber production method comprising:
collecting freely suspended nanofibers by suppressing a nanofiber discharge flow directed straight from the nanofiber generation device toward the nanofiber collection surface.

7. A nanofiber production method using a nanofiber production apparatus comprising:
a nanofiber generation device configured with:
a solution discharge nozzle that discharges a raw material polymer solution; and
a hot air discharge nozzle that discharges a high-pressure high-temperature high-speed gas;
a nanofiber collection device that collects nanofibers discharged and generated by the nanofiber generation device; and
at least one flow path control member provided between the nanofiber generation device and the nanofiber collection surface of the nanofiber collection device, the method comprising:
suppressing straight flight of a nanofiber discharge flow discharged by the nanofiber generation device; and
suppressing flight and direct collision, of an aggregation grain that has failed to become a nanofiber and has been generated, with the nanofiber collection surface of the nanofiber collection device.
